# EUROPÄISCHE PATENTSCHRIFT

(11) **EP 2 369 877 B1**
(45) Veröffentlichungstag und Bekanntmachung des Hinweises auf die Patenterteilung: **21.10.2015**
(21) Anmeldenummer: 11156835.8
(22) Anmeldetag: 03.03.2011
(51) Int. Cl.: H04W 52/38, H04W 52/24, H04W 52/10, H04W 52/14, H04W 52/28, H04W 52/36

(54) **Vorrichtung und Verfahren zur Erfassung von mobilen Endgeräten**
Apparatus and method for detection of mobile terminal
Appareil et procédé pour détection d'un terminal mobile

(30) Priorität: 26.03.2010 DE 102010012814
(43) Veröffentlichungstag der Anmeldung: 28.09.2011
(73) Patentinhaber: Rohde & Schwarz GmbH & Co. KG, 81671 München (DE)
(72) Erfinder: Pauli, Mathias, Dr., 85375 Neufahrn (DE); Schachinger, Jürgen, 83026 Rosenheim (DE); Frick, Joachim, 85152 Planegg (DE)
(74) Vertreter: Körfer, Thomas

(56) Entgegenhaltungen:
- EP-A2- 0 428 099
- WO-A1-2006/100639
- US-B1- 6 560 462

## Beschreibung

Die vorliegende Erfindung bezieht sich auf eine Vorrichtung und ein Verfahren zur verbesserten Erfassung von Mobiltelefonen oder anderen mobilen Endgeräten.

Die starke Verbreitung von Mobiltelefonen oder anderen mobilen Endgeräten lässt es sinnvoll erscheinen, dass die Position der Benutzer von solchen mobilen Endgeräten im Notfall schnell und präzise bestimmt werden kann, beispielsweise wenn der Benutzer nach einem Unglück verschüttet ist. Damit dies gelingt, müssen die mobilen Endgeräte ein Signal mit möglichst hoher Ausgangsleistung aussenden. Je höher die Ausgangsleistung des Signals dabei ist, desto schneller und präziser kann die Position des Benutzers dabei geortet und Rettungsmaßnahmen eingeleitet werden.

Aus der EP 0 428 099 A2 ist ein Verfahren bekannt, um die Sendeleistung in einem Funkübertragungssystem anzupassen, indem die Signalleistung des empfangenen Signals und die Fehlerrate ausgewertet werden. Dabei wird die Ausgangsleistung kurzfristig auf einen Wert erhöht, der nahe an der maximalen Ausgangsleistung ist, sobald die Fehlerrate oder die Änderungsgeschwindigkeit der Leistung des empfangenen Signals einen voreingestellten Schwellwert überschreiten.

Aus der WO 2006/100639 A1 ist ein Verfahren bekannt, welches es erlaubt, dass eine erste Basisstation an eine zweite Basisstation eine Nachricht übermittelt, die die maximale Sendeleistung und eine Schrittweite enthält, die angibt, in welchen Stufen die Leistung bis hin zur maximalen Sendeleistung erhöht werden soll. Die zweite Basisstation, die diese Nachricht erhält, sendet im Anschluss ein weiteres Signal und erhöht die Leistung entsprechend der empfangenen Schrittweite auf die empfangene einzustellende Leistung.

Aus der EP 1 199 903 B1 ist ein Verfahren bekannt, welches zum vom Benutzer unerkannten Aktivieren seines Mobiltelefons in einem öffentlichen zellularen Mobilfunknetz dient. Zum unbemerkten Aktivieren wird nach Empfang der Identifizierungsparameter (IMSI, IMEI) die Aussendung des Setup Signals unterbunden und stattdessen wird das Channel-Release Signal von der Basisstation zum Mobiltelefon zwecks des Abbaus der Verbindung gesendet. Diese Identifizierungsparameter können beliebig oft hintereinander abgefragt werden, wobei das Mobiltelefon zu jedem beliebigen Zeitpunkt einer bestehenden Verbindung auf einen "Identity Request" antworten muss. Die Basisstation kann dabei gleichzeitig vorgeben, wie das Mobiltelefon die Sendeleistung einzustellen hat. In dem GSM-Standard (engl. global system for mobile communications; dt. globales System zur mobilen Kommunikation) gibt es einen Befehl, der, sobald die Basisstation ihn sendet, das Mobiltelefon dazu veranlasst, mit maximaler Sendeleistung zu senden. Dadurch kann die Position des Benutzers schnell und präzise bestimmt werden.

Nachteilig an der EP 1 119 903 B1 ist, dass sich das Verfahren zur Erhöhung der Sendeleistung durch Aussenden des bestimmten Befehls nicht auf andere Mobilfunkstandards übertragen lässt. In CDMA-Systemen (engl. code division multiple access; dt. Codiermultiplexverfahren), wie z.B. UMTS (engl. Universal Mobile Telecommunications System; dt. universelles mobiles Telekommunikationssystem) wird die Sendeleistung des mobilen Endgeräts derart geregelt, dass die Basisstation (bzw. NodeB) ein Signal/Interferenz-Verhältnis von jedem mobilen Endgerät misst und jedem mobilen Endgerät mitteilt, ob dieses seine Sendeleistung erhöhen oder erniedrigen soll, so dass das an der Basisstation empfangene Signal mit einem vorgegebenen Signal/Interferenz-Verhältnis empfangen werden kann. Dabei muss die Feldstärke von allen an der Basisstation ankommenden Signale aller mit der Basisstation verbundenen mobilen Endgeräte möglichst gleich hoch sein. Insgesamt soll die Feldstärke dabei möglichst niedrig sein, so dass benachbarte Funkzellen nicht unnötig gestört werden.

Aus diesem Grund sieht der 3GPP-Standard für UMTS nicht vor, dass die Sendeleistung eines mobilen Endgeräts direkt über ein auf die Anwendungsschicht zugreifendes Programm festgelegt werden kann. Einzig das Signal/Interferenz-Verhältnis kann durch einen Benutzer für jedes Endgerät manuell festgelegt werden. Dies wird z.B. in 3GPP Standard TS 25.435 V5.9.0 (2006-09) Release 5 beschrieben. Innerhalb einer inneren Schleife wird in der physikalischen Schicht der Basisstation ausgehend von dem gewünschten Signal/Interferenz-Verhältnis und dem tatsächlich gemessenen Signal/Interferenzverhältnis des mobilen Endgeräts eine Stellgröße zur Regelung der Sendeleistung des mobilen Endgeräts erzeugt, die an das mobile Endgerät übermittelt wird und dieses dazu veranlasst, die Sendeleistung mit einer festgelegten Schrittweite zu erhöhen oder zu erniedrigen. Allerdings ist auch durch den größten einstellbaren Sollwert für das Signal/Interferenz-Verhältnis nicht gewährleistet, dass das mobile Endgerät dann mit der maximalen Sendeleistung sendet, um dadurch besser geortet werden zu können. Dies ist besonders dann nicht der Fall, wenn sich das mobile Endgerät in unmittelbarer Nähe zur Basisstation befindet.

Es ist daher die Aufgabe dieser Erfindung, ein Verfahren und eine Basisstation zu schaffen, mit deren Hilfe die Sendeleistung eines mobilen WCDMA-fähigen Endgeräts auf möglichst einfache Weise auf seine maximale Sendeleistung erhöht werden kann, um dadurch eine möglichst schnelle und präzise Ortung des mobilen Endgeräts zu ermöglichen.

Diese Aufgabe wird durch das erfindungsgemäße Verfahren gemäß dem Anspruch 1 und durch die erfindungsgemäße Basisstation gemäß dem Anspruch 12 gelöst. In den Unteransprüchen sind vorteilhafte Weiterbildungen des erfindungsgemäßen Verfahrens und der erfindungsgemäßen Vorrichtung genannt.

Das erfindungsgemäße Verfahren zum gezielten Verändern der standardkonformen Sendeleistung zur Erfassung eines mobilen Endgeräts weist zumindest eine Basisstation auf. Die Basisstation erfasst ein Signal/Interferenz-Verhältnis des mobilen Endgeräts und führt dieses einer Regeleinheit zu. Eine Steuereinheit beeinflusst die Regeleinheit derart, dass eine erzeugte Stellgröße das mobile Endgerät dazu veranlasst, die Sendeleistung bis zu der maximalen Sendeleistung zu erhöhen. Alternativ kann eine manipulierte Stellgröße aus einer Speichereinheit ausgelesen wird, die das mobile Endgerät dazu veranlasst, die Sendeleistung zumindest annähernd bis zu der maximalen Sendeleistung zu erhöhen.

Besonders vorteilhaft dabei ist, dass mit einem minimalen Aufwand unter Nutzung von bereits vorhandenen Funktionen eine Stellgröße erzeugt werden kann, welche mit den bekannten Funktionen an das mobile Endgerät übertragen wird und dieses dazu veranlasst, die Sendeleistung soweit zu erhöhen, bis dieses mit der maximalen Sendeleistung sendet.

Bei der erfindungsgemäßen Vorrichtung handelt es sich um eine Basisstation, die zum gezielten Verändern der standardkonformen Sendeleistung eines mobilen Endgeräts verwendet wird, damit dieses besser und schneller geortet werden kann. Die Basisstation weist eine Messeinheit auf, die ein Signal/Interferenz-Verhältnis des mobilen Endgeräts misst und einer Regeleinheit zuführt. Eine Steuereinheit ist direkt oder indirekt mit der Regeleinheit verbunden. Die dabei durch die Regeleinheit erzeugte Stellgröße veranlasst das mobile Endgerät dazu, die Sendeleistung bis zu der maximalen Sendeleistung zu erhöhen. Alternativ wird eine manipulierte Stellgröße aus einer Speichereinheit geladen, die das mobile Endgerät dazu veranlasst, die Sendeleistung bis zu der maximalen Sendeleistung zu erhöhen.

Besonders vorteilhaft bei der erfindungsgemäßen Basisstation ist, dass die Regeleinheit zur Einstellung der Sendeleistung für die mobilen Endgeräte nicht verändert werden muss. Die Regeleinheit selbst wird entweder durch Veränderung der Ist-Werte oder Soll-Werte dahingehend verwendet, dass Stellgrößen erzeugt werden, die bei dem mobilen Endgerät die Erhöhung der Sendeleistung bewirken. Oder aber es wird direkt eine manipulierte Stellgröße aus einer Speichereinheit geladen und an das mobile Endgerät übertragen, die das mobile Endgerät dazu veranlasst die Sendeleistung zu erhöhen.

Außerdem ist von Vorteil, dass ein Befehl an die Steuereinheit bevorzugt über die Iub-Schnittstelle übertragen wird. Diese Schnittstelle ist bereits vorhanden und verbindet zumindest die Schichten 2 und 3 (engl. layer) mit der Bitübertragungsschicht 1 (engl. physical layer 1). Es muss somit keine neue Schnittstelle implementiert werden, um einen Befehl von der Anwendungsschicht zu der Bitübertragungsschicht übertragen zu können. Die Schichten 2 und 3 können somit unverändert beibehalten werden. Sobald die Steuereinheit das Anliegen eines bestimmten Befehls erkennt, wird die Regelschleife entsprechend den unabhängigen Ansprüchen geändert, oder es wird eine manipulierte Stellgröße aus der Speichereinheit geladen.

Schlussendlich ist es von Vorteil, dass es sich bei dem Befehl um den Befehl zur Einstellung eines bestimmten Signal/Interferenz Verhältnisses handelt. Dieser Befehl ist in dem Standard 3GPP definiert. Besonders vorteilhaft ist dabei, dass außer in der Bitübertragungsschicht keinerlei Änderungen in den anderen Schichten erfolgen müssen. Der Befehl wird dahingehend verwendet, dass, sobald dieser ausgeführt wird, ein bestimmter Sollwert für das Signal/Interferenz Verhältnis des betreffenden mobilen Endgeräts an die Bitübertragungsschicht übertragen wird. Allerdings wird dieser bestimmte Sollwert im normalen Betrieb nicht verwendet, weil es bei diesem aufgrund der daraus resultierenden zu geringen Sendeleistung des mobilen Endgeräts zu einem sofortigen Verbindungsabbruch kommen würde. Wird also dieser Befehl mit diesem bestimmten Sollwert in der Bitübertragungsschicht empfangen, so kann auf einfache Art und Weise das bereits beschriebene Verfahren ausgeführt werden.

Bei einer Ausführungsform der Erfindung wird nach erfolgter Ortung ein weiterer Befehl an die Regeleinheit übertragen, wodurch die erzeugte Stellgröße das mobile Endgerät dazu veranlasst, die Sendeleistung derart anzupassen, dass das gemessene Signal/Interferenz-Verhältnis des mobilen Endgeräts in etwa gleich groß ist, wie das gemessene Signal/Interferenz-Verhältnis der übrigen mobilen Endgeräte.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: eine Übersicht über das Gesamtsystem, mit der erfindungsgemäßen Basisstation, dem Peilsystem und dem mobilen Endgerät;
- Fig. 2: eine Übersicht über das Zusammenspiel der äußeren Schleife und der inneren Schleife zur Leistungsregelung;
- Fig. 3: eine Übersicht über die innere Schleife mit der erfindungsgemäßen Steuereinheit;
- Fig. 4: eine weiteres erfindungsgemäßes Ausführungsbeispiel der inneren Schleife mit der Steuereinheit; und
- Fig. 5: ein Flussdiagramm, welches den erfindungsgemäßen Ablauf zur Erhöhung der Sendeleistung eines mobilen Endgeräts beschreibt.

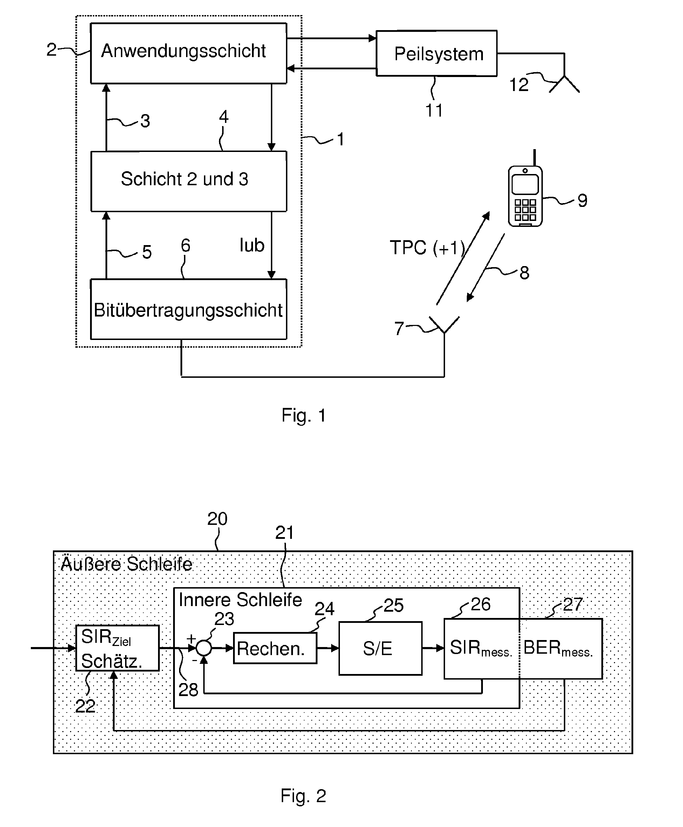

Fig. 1 zeigt eine Übersicht über das Gesamtsystem. In Fig. 1 ist die Basisstation 1 in ihrem Schichtenmodell dargestellt. Die Basisstation 1 beinhaltet eine Anwendungsschicht 2 (engl. application layer), welche die oberste Schicht darstellt und nicht dargestellten darüber liegenden Anwendungen Zugriff auf die unter ihr liegenden Schichten erlaubt. Beispielsweise greift eine Anwendung, die zum Verwalten der Basisstation 1 dient und über die das zu ortende mobile Endgerät 9 ausgewählt werden kann, auf die Anwendungsschicht 2 zu. Die Anwendungsschicht 2 kommuniziert mit einem darunter liegenden Schichtsystem 4. Dieses Schichtsystem besteht aus den Schichten (engl. layer) 2 und 3. Diese Kommunikation erfolgt über eine Schnittstelle 3. Bei dieser Schnittstelle 3 kann es sich beispielsweise um eine Lan-Schnittstelle (engl. local area network; dt. lokales Netz) handeln.

Das Schichtsystem 4, welches die zweite und die dritte Schicht beinhaltet, ist z.B. im 3GPP-Standard (engl. 3rd Generation Partnership Project; dt. partnerschaftliches Projekt der dritten Generation) ausführlich dokumentiert. Bei der dritten Schicht handelt es sich um die Radio Resource Control Schicht (dt. Funkressourcen Kontrollschicht). Auf dieser dritten Schicht ist das Radio Resource Protocol (dt. Funkressourcen Protokoll) angesiedelt. Dieses sorgt z.B. für die Signalisierung zwischen dem mobilen Endgerät 9 (UE, engl. user equipment) und UTRAN (engl. UMTS terrestrial radio access network; dt. UMTS terrestrisches Funk Zugangsnetzwerk). Zu den weiteren Funktionen dieses Protokolls gehören der Verbindungsaufbau und der Verbindungsabbau. Innerhalb der dritten Schicht ist außerdem die äußere Schleife 20 zur Leistungsregelung implementiert. Auf diese wird nachfolgend noch genauer eingegangen.

Das Schichtsystem 4, welches die zweite und die dritte Schicht beinhaltet, ist über die Schnittstelle 5 mit der Bitübertragungsschicht 1 (engl. physical layer) verbunden. Bei dieser Schnittstelle handelt es sich bevorzugt um eine Iub-Schnittstelle, wie diese z.B. in 3GPP TS 25.435 V.5.9.0 2006-09 Release 5 definiert ist.

In der Bitübertragungsschicht 6 wird das Sendesignal generiert, an nicht dargestellte HF-Stufen übertragen und über die Antenne 7 ausgestrahlt. In der Bitübertragungsschicht 6 ist auch die innere Schleife 21 für die Leistungsregelung vorhanden, in welcher die Regelschleife für die Leistungsregelung ausgeführt wird. Außerdem findet hier von jedem mobilen Endgerät 9 die Messung des Signal/Interferenz-Verhältnisses statt.

Die Datenstruktur des WCDMA-Verfahrens, zu welchem auch UMTS gehört, ist in Rahmen (engl. frames) organisiert. Die Rahmendauer beträgt z.B. 10 ms. Jeder Rahmen besteht z.B. aus 15 Zeitschlitzen (engl. time slots). Innerhalb eines jeden Zeitschlitzes wird ein Befehl über die Luftschnittstelle 8 an das mobile Endgerät 9 übermittelt, nach dessen Erhalt das mobile Endgerät 9 entweder seine Sendeleistung um einen bestimmten Wert erhöht oder erniedrigt. Bei dem Befehl wird von einem TPC-Befehl (engl. transmit power control; dt. Sendeleistungsregelung) gesprochen. Das mobile Endgerät 9 passt folglich z.B. 1500 Mal pro Sekunde seine Sendeleistung an eine von der Basisstation 1 erhaltene Vorgabe an. Selbiges gilt auch in umgekehrter Richtung, in welcher das mobile Endgerät 9 die Basisstation 1 auffordert, die Sendeleistung entweder zu erhöhen oder zu erniedrigen. Allerdings ist dies für die vorliegende Erfindung nicht von Bedeutung.

Nachdem die Basisstation 1 das mobile Endgerät 9 laufend zur Erhöhung der Sendeleistung aufgefordert hat, kann über ein Peilsystem 11 mit der dazugehörigen Antenne 12 der Standort des mobilen Endgeräts 9 schnell und präzise bestimmt werden. Das Peilsystem 11 kann dabei optional über die Schnittstelle 10 mit der Basisstation 1 verbunden sein. Bevorzugt ist das Peilsystem 11 dabei mit der Anwendungsschicht 2 verbunden. Sobald der Standort des mobilen Endgeräts 9 bestimmt ist, teilt das Peilsystem 11 der Basisstation 1 mit, dass diese das mobile Endgerät 9 wieder in den normalen Zustand überführen soll, in welchem die Feldstärke des empfangenen Signals des mobilen Endgeräts 9 an der Basisstation 1 wieder möglichst gleich hoch sein soll, wie die Feldstärke der anderen mit der Basisstation 1 verbundenen mobilen Endgeräte. Bei dem mobilen Endgerät 9 kann es sich neben UMTS-Mobiltelefonen auch um UMTS-Datenkarten, bzw. UMTS-Datensticks handeln.

Fig. 2 gibt einen Überblick über das Zusammenspiel der äußeren Schleife 20 und der inneren Schleife 21, die zur Erzeugung der TPC-Befehle dienen. Die äußere Schleife 20 (engl. outer loop) ist dabei in der dritten Schicht und die innere Schleife 21 (engl. inner loop) in der ersten Schicht implementiert. Jede Basisstation 1 berechnet dabei den zu sendenden TPC-Befehl für jedes der mit ihr verbundenen mobilen Endgeräte 9.

Der äußeren Regelschleife 20 wird von der Anwendungsschicht 2 z.B. entweder eine maximale Bitfehlerrate BER (engl. bit error rate) bzw. Blockfehlerrate BLER (engl. block error rate) für jedes mobile Endgerät 9 mitgeteilt, oder es wird von der Anwendungsschicht 2 direkt das Signal/Interferenz-Verhältnis für jedes einzelne mobile Endgerät 9 festgelegt. Die Bitfehlerrate oder Blockfehlerrate wird an einen Eingang einer Schätzeinheit 22 für das Signal/Interferenz-Verhältnis zugeführt. Einem anderen Eingang der Schätzeinheit 22 wird die gemessene Bitfehlerrate bzw. Blockfehlerrate zugeführt. Diese Schätzeinheit 22 legt einen Sollwert 28 für das Signal/Interferenz-Verhältnis fest und gibt diesen an einem Ausgang wieder aus. Der Sollwert 28 für das Signal/Interferenz-Verhältnis kann auch manuell z.B. zwischen -8,2 dB und +17,3 dB eingestellt werden. Dies ist dem Standard z.B. aus 3GPP TS 25.435 V5.9.0 (2006-09)zu entnehmen.

Der Sollwert 28 für das Signal/Interferenz-Verhältnis wird im 3GPP-Standard auch als UL_SIR_TARGET Wert bezeichnet. Durch diesen 8-Bit großen Wert wird das Signal/Interferenz-Verhältnis festgelegt. Nimmt der Wert des Sollwerts 28 0x00 an, so ist ein Signal/Interferenz-Verhältnis von -8,2 dB erwünscht. Nimmt der Sollwert 28 den Wert 0xFF an, so soll ein Signal/Interferenz-Verhältnis von 17,3 dB erreicht werden. Die Abstufung beträgt dabei 0,1 dB. Die Schätzeinheit 22 kann im einfachsten Fall aus einem Zweipunktregler bestehen, welcher eine Differenz aus zwischen einer maximalen vorgegebenen Bitfehlerrate bzw. Blockfehlerrate und der gemessenen Bitfehlerrate bzw. Blockfehlerrate bildet und je nachdem, ob diese Differenz positiv oder negativ ist, den Sollwert 28 für das Signal/Interferenz-Verhältnis um 0,1 dB erhöht oder erniedrigt. Sobald von der Anwendungsschicht 2 ein direkter Sollwert 28 für das Signal/Interferenz-Verhältnis für das zu ortende mobile Endgerät 9 vorgegeben wird, wird dieser Sollwert 28 für das Signal/Interferenz-Verhältnis direkt an die innere Schleife 21 weitergegeben. Allerdings führt ein Sollwert 28 für das Signal/Interferenz-Verhältnis von 17,3 dB nicht dazu, dass das mobile Endgerät 9 auch mit der maximalen Sendeleistung sendet. Gerade für den Fall, dass sich das mobile Endgerät 9 in der Nähe der Basisstation befindet, wird ein Wert von 17,3 dB für das Signal/Interferenzverhältnis schon bei einer geringen Sendeleistung erreicht. Sollwerte 28 von weniger als 12,5 dB für das Signal/Interferenz-Verhältnis führen in der Praxis meist zu Abbrüchen der Verbindung.

Der Sollwert 28 für das Signal/Interferenz-Verhältnis (UL_SIR_TARGET) wird im Weiteren an die innere Schleife 21 übergeben und mit positivem Vorzeichen auf einen Summationspunkt 23 aufgeschaltet. Mit negativem Vorzeichen wird der gemessene Wert für das Signal/Interferenz-Verhältnis auf einen zweiten Eingang des Summationspunktes 23 aufgeschaltet. Der Ausgang dieses Summationspunktes 23 wird mit einer Recheneinheit 24 verbunden. Algorithmen innerhalb der Recheneinheit 24 ermitteln anhand der Differenz zwischen dem Sollwert 28 für das Signal/Interferenz-Verhältnis und dem gemessenen Wert des Signal/Interferenz-Verhältnisses eine Stellgröße. Die Stellgröße wird auch als TPC-Befehl bezeichnet und kann die Werte -1, 0 und +1 annehmen, wobei meist nur mit den Werten -1 und +1 gearbeitet wird. Die Recheneinheit 24 kann dabei ebenfalls als Zweipunktregler realisiert sein, der eine +1 für den Fall ausgibt, dass die Differenz am Summationspunkt größer Null ist und eine -1 für den Fall erzeugt, dass die Differenz am Summationspunkt 23 kleiner Null ist. Für den Fall, dass beide Größen gleich groß sind, kann entweder eine +1 oder eine -1 ausgegeben werden.

Die Stellgröße wird im Weiteren Verlauf an die Sendeeinheit- und Empfangseinheit 25 übertragen und an das mobile Endgerät 9 ausgesandt. Anschließend empfängt die Sendeeinheit- und Empfangseinheit 25 die nächsten Daten von dem mobilen Endgerät 9. Die empfangenen Daten werden anschließend an eine Messeinheit 26 weitergeleitet, die das Signal/Interferenz-Verhältnis bestimmt und mit negativem Vorzeichen auf den Summationspunkt 23 aufschaltet. Aus den empfangenen Daten wird in einer zweiten Messeinheit 27 die Bitfehlerrate bzw. die Blockfehlerrate errechnet. Die zweite Messeinheit 27 ist dabei in der äußeren Schleife 20 implementiert. Das Ergebnis der zweiten Messeinheit 27 wird der Schätzeinheit 22 zugeführt.

Sobald das mobile Endgerät 9 die Stellgröße (TPC-Befehl) empfängt, wird die Sendeleistung entweder um ein dB erhöht oder um ein dB erniedrigt. Andere Schrittweiten sind dabei optional und können ebenfalls eingestellt werden. Um eine feinere Abstimmung zu erreichen, kann ebenfalls festgelegt werden, dass das mobile Endgerät 9 die Sendeleistung erst dann erhöht oder erniedrigt, wenn fünf gleiche Stellgrößen hintereinander empfangen werden. Diese Feinheiten sind allerdings bereits im 3GPP Standard ausführlich beschrieben, weshalb im Folgenden auf weitere Ausführungen verzichtet wird.

Das Ziel ist bei der bekannten Sendeleistungsregelung, dass eine maximal zulässige Bitfehlerrate bzw. Blockfehlerrate nicht überschritten wird und dass die Feldstärke aller Signale der mit der Basisstation 1 verbundenen mobilen Endgeräte 9 an der Basisstation 1 möglichst gleich hoch ist und insgesamt möglichst niedrig ist, um eine große räumliche Abdeckung der Basisstation 1 zu erreichen.

Die äußere Schleife 20 wird dabei innerhalb der dritten Schicht z.B. zwischen 10 und 100 Mal pro Sekunde ausgeführt, wohingegen die innere Schleife 21 z.B. 1500 Mal pro Sekunde ausgeführt wird. Gerade bei hohen Geschwindigkeiten, z.B. für den Fall, dass das mobile Endgerät 9 in einem Zug verwendet wird, sorgt die schnelle Sendeleistungsregelung dafür, dass eine möglichst gute Verbindungsqualität erreicht wird.

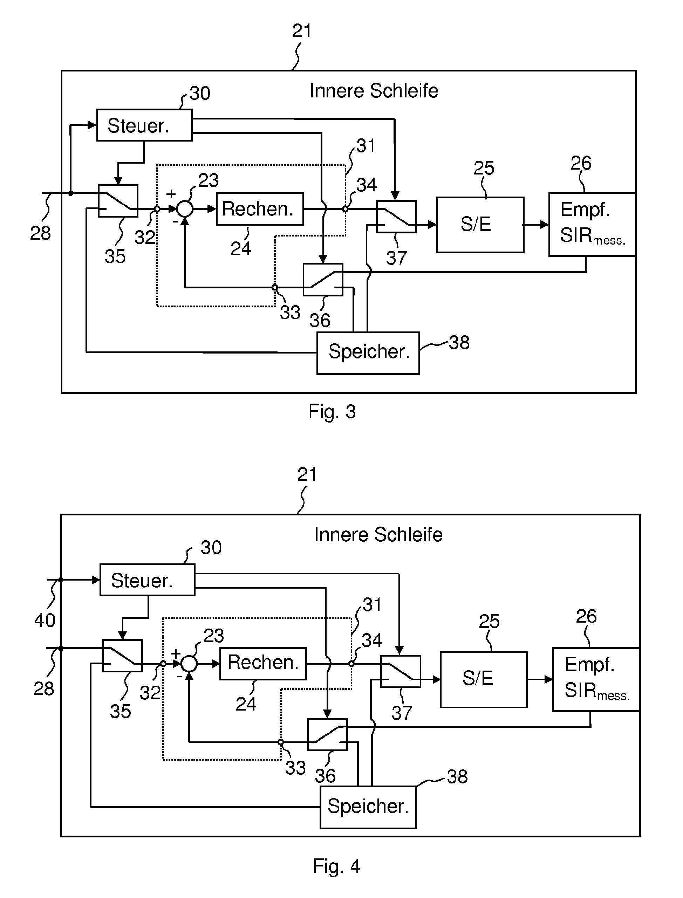

Fig. 3 zeigt eine Übersicht über die innere Schleife 21 mit der erfindungsgemäßen Steuereinheit 30. Wie aus Fig. 2 bekannt ist, wird der inneren Schleife 21 ein Sollwert 28 für das Signal/Interferenz-Verhältnis zugeführt. Dieser Sollwert 28 für das Signal/Interferenz-Verhältnis liegt im normalen Betriebsfall meist bei über 12,5 dB. Dieser Sollwert 28 für das Signal/Interferenz-Verhältnis wird mit positivem Vorzeichen auf den Summationspunkt 23 aufgeschaltet. Mit negativem Vorzeichen wird der gemessene Wert für das Signal/Interferenz-Verhältnis auf den Summationspunkt 23 aufgeschaltet. Der Ausgang des Summationspunkts 23 ist mit der Recheneinheit 24 verbunden.

Die Recheneinheit 24 erzeugt eine Stellgröße, die an die Sende- und Empfangseinheit 25 übertragen und an das mobile Endgerät 9 gesendet wird. Die Sende- und Empfangseinheit 25 empfängt weiterhin ein Signal von dem mobilen Endgerät 9 und leitet dieses an die erste Messeinheit 26 weiter. Diese misst das Signal/Interferenz-Verhältnis und führt dieses auf den Summationspunkt 23 zurück. Eine Regeleinheit 31 ist in Fig. 3 gepunktet eingezeichnet. Diese umfasst den Summationspunkt 23 und die Recheneinheit 24. Der Regeleinheit 31 wird an einem ersten Eingang 32 ein Sollwert 28 für das Signal/Interferenz-Verhältnis zugeführt. Ein zweiter Eingang 33 der Regeleinheit 31 ist mit der Messeinheit 26 verbunden. An einem Ausgang 34 der Regeleinheit 31 liegt eine Stellgröße bereit, die über die Sende- und Empfangseinheit 25 an das mobile Endgerät 9 übertragen wird.

Im Folgenden werden verschiedene Möglichkeiten näher erläutert, mit welchen die Sendeleistung des mobilen Endgeräts 9 schrittweise auf den maximalen Wert erhöht werden kann. Alle diese Möglichkeiten haben gemeinsam, dass einzig die innere Schleife 21 geändert werden muss. Das Schichtsystem 4, bestehend aus den Schichten 2 und 3, muss dabei ebenso wenig geändert werden, wie die Schnittstellen 3 und 5, die die einzelnen Schichten miteinander verbinden. Dadurch ist gewährleistet, dass die Basisstation 1 zu einem großen Teil dem 3GPP-Standard entspricht und sich die notwendigen Änderungen auf ein Minimum reduzieren.

Der 3GPP-Standard sieht vor, dass für jedes mobile Endgerät 9 ein Signal/Interferenz-Verhältnis in der Anwendungsschicht 2 manuell vorgegeben werden kann. Wie bereits beschrieben, kommt es bei Werten von unter 12,5 dB zu Verbindungsabbrüchen, so dass diese Werte von der Schätzeinheit 22 für das Signal/Interferenz-Verhältnis niemals eingestellt werden. Die erfindungsgemäße innere Schleife 21 weist eine Steuereinheit 30 auf, welcher an einem ersten Eingang der einzustellende Sollwert 28 für das Signal/Interferenz-Verhältnis zugeführt wird. Sobald der inneren Schleife 21 ein Sollwert 28 zugeführt wird, welcher im normalen Betriebsablauf nicht eingestellt wird, wird dies von der Steuereinheit 30 erfasst. Bevorzugt wird die Steuereinheit 30 so eingestellt, dass sie auf den kleinsten einzustellenden Sollwert 28 für das Signal/Interferenz-Verhältnis reagiert. Dabei handelt es sich um den Wert von -8,2 dB, bzw. der Bitfolge 0x00 für den Befehl UL_SIR_TARGET, wie er z.B. in Kapitel 6.3.3.9.2 des 3GPP Standards TS 25.435 V5.9.0 (2006-09) Release 5 definiert ist. Sobald dieser Wert durch den Benutzer in der Anwendungsschicht 2 für das zu ortende mobile Endgerät 9 eingestellt wird, wird dieser der inneren Schleife 21 für die Leistungsregelung des zu ortenden mobilen Endgeräts 9 zugeführt. Die Steuereinheit 30 erfasst diesen Wert und führt je nach Ausführungsform der inneren Schleife 21 verschiedene Aktionen aus.

In Fig. 3 sind drei verschiedene Ausführungsformen dargestellt, wie die innere Schleife 21 auf einfache Weise verändert wird, um dauerhaft Befehle zu Erhöhung der Sendeleistung des mobilen Endgeräts 9 zu erzeugen. Für den normalen Betriebsablauf sind die einzelnen Elemente derart miteinander verbunden, wie dies in Fig. 3 dargestellt ist.

In einem ersten Ausführungsbeispiel steht die Steuereinheit 30 mit einer ersten Schalteinheit 35 in Verbindung. Die erste Schalteinheit 35 weist zwei Eingänge auf, die je nach Schaltzustand abwechselnd auf einen Ausgang geschaltet werden. Dem ersten Eingang der ersten Schalteinheit 35 wird der Sollwert 28 des Signal/Interferenz-Verhältnisses zugeführt. Der zweite Eingang der ersten Schalteinheit 35 ist mit einer Speichereinheit 38 verbunden. Sobald die Steuereinheit 30 erkennt, dass der Sollwert 28 für das Signal/Interferenz-Verhältnis des zu ortenden mobilen Endgeräts 9 im Beispiel -8,2 dB betragen soll, gibt diese ein Signal an die erste Schalteinheit 35 aus.

Die erste Schalteinheit 35 wechselt daraufhin die Schalterstellung und verbindet im Folgenden den zweiten Eingang mit dem Ausgang. Dadurch ist die Speichereinheit 38 über den ersten Eingang 32 der Regeleinheit 31 mit dem Summationspunkt 23 verbunden. Der Sollwert für das Signal/Interferenz-Verhältnis, welcher der Regeleinheit 31 zugeführt wird, stammt nun aus der Speichereinheit 38. Der neue Sollwert für das Signal/Interferenz-Verhältnis, welcher aus der Speichereinheit 38 geladen wird, ist dabei so gewählt, dass dieser stets größer ist, als der durch die Messeinheit 26 gemessene Sollwert für das Signal/Interferenz-Verhältnis. Die Regeleinheit 31 erzeugt daraufhin immer eine Stellgröße (einen TPC-Befehl), die das mobile Endgerät 9 auffordert, die Sendeleistung weiter zu erhöhen.

In einem zweiten Ausführungsbeispiel steht die Steuereinheit 30 mit einer zweiten Schalteinheit 36 in Verbindung. Die zweite Schalteinheit 36 weist zwei Eingänge auf, die je nach Schaltzustand abwechselnd auf einen Ausgang geschaltet werden. Dem ersten Eingang der zweiten Schalteinheit 35 wird der gemessene Wert des Signal/Interferenz-Verhältnisses von der Messeinheit 26 zugeführt. Der zweite Eingang der zweiten Schalteinheit 36 ist mit einer Speichereinheit 38 verbunden. Sobald die Steuereinheit 30 erkennt, dass der Sollwert 28 für das Signal/Interferenz-Verhältnis des zu ortenden mobilen Endgeräts 9 im Beispiel -8,2 dB betragen soll, gibt diese ein Signal an die zweite Schalteinheit 36 aus. Die zweite Schalteinheit 36 wechselt daraufhin die Schalterstellung und verbindet im Folgenden den zweiten Eingang mit dem Ausgang. Dadurch ist die Speichereinheit 38 mit dem Summationspunkt 23 verbunden. Der Wert für das gemessene Signal/Interferenz-Verhältnis, welches der Regeleinheit 31 am zweiten Eingang 33 zugeführt wird, entstammt nun der Speichereinheit 38. Der neue Wert für das gemessene Signal/Interferenz-Verhältnis, welcher aus der Speichereinheit 38 geladen wird, ist dabei so gewählt, dass dieser stets kleiner ist, als der Sollwert 28 für das Signal/Interferenz-Verhältnis, welcher an dem ersten Eingang 32 der Regeleinheit 31 anliegt. Die Regeleinheit 31 erzeugt daraufhin stets eine Stellgröße, die das mobile Endgerät 9 auffordert, die Sendeleistung weiter zu erhöhen.

In einem dritten Ausführungsbeispiel steht die Steuereinheit 30 mit einer dritten Schalteinheit 37 in Verbindung. Die dritte Schalteinheit 37 weist zwei Eingänge auf, die je nach Schaltzustand abwechselnd auf einen Ausgang geschaltet werden. Der erste Eingang der dritten Schalteinheit 37 ist mit dem Ausgang 34 der Regeleinheit 31 verbunden, worüber dieser die Stellgröße zugeführt wird. Der zweite Eingang der dritten Schalteinheit 37 ist mit der Speichereinheit 38 verbunden. Sobald die Steuereinheit 30 erkennt, dass der Sollwert 28 für das Signal/Interferenz-Verhältnis des zu ortenden mobilen Endgeräts 9 im Beispiel -8,2 dB betragen soll, gibt diese ein Signal an die dritte Schalteinheit 37 aus.

Die dritte Schalteinheit 37 wechselt daraufhin die Schalterstellung und verbindet im Folgenden den zweiten Eingang mit dem Ausgang. Dadurch ist die Speichereinheit 38 mit der Sende- und Empfangseinheit 25 verbunden. Die Stellgröße für die Sendeleistung des zu ortenden mobilen Endgeräts 9 entstammt im Folgenden der Speichereinheit 38. Der neue Wert für die Stellgröße, welcher aus der Speichereinheit 38 geladen wird, ist dabei so gewählt, dass dieser stets dazu führt, dass das mobile Endgerät 9 die Sendeleistung stets weiter erhöht. Weil es sich bei der Stellgröße um TPC-Befehle handelt, die einzig die Werte -1, 0, +1, bevorzugt -1 und +1 annehmen können, wird stets eine +1 aus der Speichereinheit 38 geladen. Bei der aus der Speichereinheit 38 geladenen Stellgröße kann daher auch von einer manipulierten Stellgröße gesprochen werden, weil diese unabhängig von der Regeleinheit 31 ist.

Sowohl bei dem ersten, dem zweiten, als auch dem dritten Ausführungsbeispiel ist die Steuereinheit 30 indirekt über die Schalteinheiten 35, 36 oder 37 mit der Regeleinheit 31 verbunden. In einem nicht dargestellten weiteren erfindungsgemäßen Ausführungsbeispiel kann die Steuereinheit 30 auch direkt mit der Regeleinheit 31 verbunden sein. Die Steuereinheit 30 bewirkt bei einer direkten Verbindung, dass Algorithmen in der Recheneinheit 24 derart verändert werden, dass durch die Regeleinheit 31 eine Stellgröße erzeugt wird, die das mobile Endgerät 9 dazu veranlasst, die Sendeleistung weiter zu erhöhen. Sowohl bei der direkten, als auch bei der indirekten Verbindung zwischen der Steuereinheit 30 und der Regeleinheit 31 handelt es sich um kausale Verbindungen, weil eine Änderung einer Ausgangsgröße der Steuereinheit 30 eine Änderung der Stellgröße der Regeleinheit 31 nach sich zieht.

Sobald das mobile Endgerät 9 geortet ist, wird ein normaler Sollwert 28 für das Signal/Interferenz-Verhältnis (> 12,5 dB) des mittlerweile georteten mobilen Endgeräts 9 an die innere Schleife 21 übertragen. Die Steuereinheit 28 erkennt dies und steuert die Schalteinheiten 35 oder 36 oder 37 wie in Fig. 3 gezeigt an.

Fig. 4 zeigt eine weitere Übersicht über die innere Schleife 21 mit der erfindungsgemäßen Steuereinheit 30. Der Aufbau der inneren Schleife 21 aus Fig. 4 entspricht im Wesentlichen dem aus Fig. 3, worauf hiermit verwiesen wird. Einzig der Steuereinheit 30 wird an einem Eingang nicht mehr der Sollwert 28 für das Signal/Interferenz-Verhältnis zugeführt, sondern ein separater Befehl. Die Steuereinheit 30 ist in Fig. 4 über eine weitere Schnittstelle 40, wie z.B. Ethernet mit der Anwendungsschicht 2 verbunden. Über diese Schnittstelle 40 wird der Befehl zur Erhöhung der Erniedrigung der Sendeleistung des zu ortenden mobilen Endgeräts 9 an die innere Schleife 21, welche sich in der Bitübertragungsschicht 6 befindet, gesendet. Andere dem Fachmann geläufige Schnittstellen sind hierfür ebenfalls denkbar.

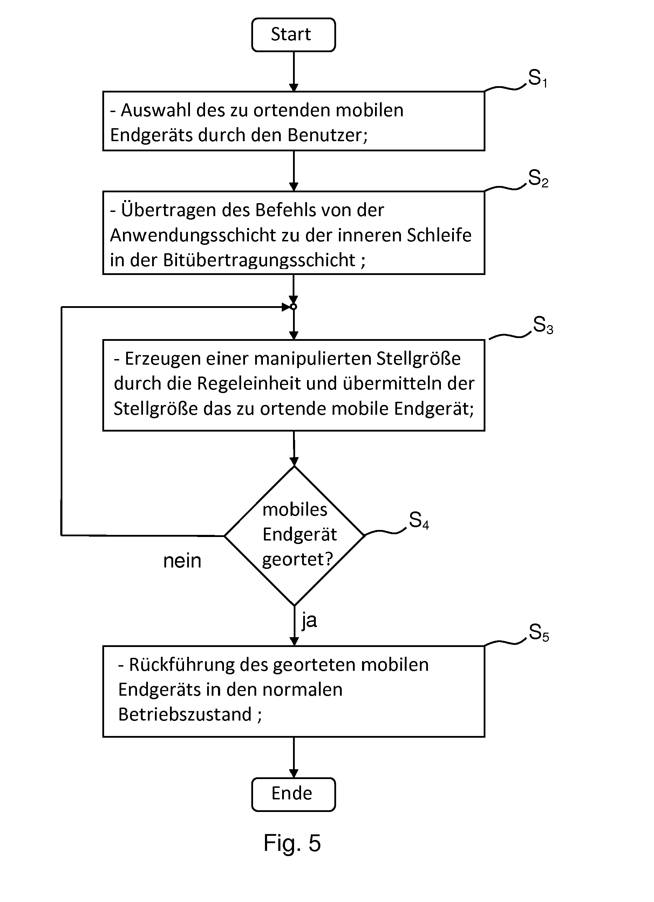

Fig. 5 zeigt ein Flussdiagramm, welches den erfindungsgemäßen Ablauf zur Erhöhung der Sendeleistung eines mobilen Endgeräts 9 beschreibt. In einem ersten Schritt S₁ erfolgt die Auswahl des zu ortenden mobilen Endgeräts 9. Hierfür gibt ein Benutzer z.B. die IMEI-Nummer des zu ortenden mobilen Endgeräts 9 in ein Programm ein, welches mit der Anwendungsschicht 2 kommuniziert.

Im zweiten Schritt S₂ wird ein Befehl zur Erhöhung der Sendeleistung von der Anwendungsschicht 2 an die Bitübertragungsschicht 6 übertragen. Bei dem Befehl handelt es sich bevorzugt um das Kommando zu Einstellung des Signal/Interferenz-Verhältnis für ein mobiles Endgerät 9. Dieser Befehl wird dahingehend geändert, dass für das Signal/Interferenz-Verhältnis ein Wert an die Bitübertragungsschicht 6 übermittelt wird, welcher im normalen Betriebsablauf nicht vorkommt. Hierzu wird besonders bevorzugt die Bitfolge 0x00 für den UL_SIR_TARGET-Wert übertragen. Vorteilhaft dabei ist, dass das Schichtsystem 4, die Schichten 2 und 3 umfassend, nicht geändert werden muss. Die ohnehin vorhandenen Schnittstellen (z.B. Iub-Schnittstelle), die diese Schichten miteinander verbinden, müssen ebenfalls nicht angepasst werden. Allerdings ist es auch möglich, die Anwendungsschicht 2 über eine andere Schnittstelle (z.B. Ethernet) mit der inneren Schleife 21 in der Bitübertragungsschicht 6 zu verbinden.

In einem dritten Schritt S₃ wird durch eine Regeleinheit 31 innerhalb der inneren Schleife 21 eine Stellgröße (TPC-Befehl) erzeugt und über die Sende- und Empfangseinheit 25 an das mobile Endgerät 9 übertragen, die das mobile Endgerät 9 dazu veranlasst, die Sendeleistung entsprechend dem 3GPP-Standard zu erhöhen (Tabelle 6.4 in 3GPP TS 25.101 V5.20.0 (2006-12) Release 5). Hierzu prüft eine Steuereinheit 30, ob der empfangene Befehl eine bestimmte Bitfolge beinhaltet. Ist dies der Fall, so wird gemäß der Beschreibung zu Fig. 3 und Fig. 4 die Stellgröße modifiziert und an das mobile Endgerät 9 übermittelt. Für den Fall, dass das mobile Endgerät 9 zu diesem Zeitpunkt keine Daten- oder Sprachverbindung zur der Basisstation 1 unterhält, können gemäß der Patentschrift EP 1 199 903 B1 eine oder mehrere Silent-Call-Verbindungen zu dem mobilen Endgerät aufgebaut werden.

In einem vierten Schritt S₄ versucht das Peilsystem 10 das mobile Endgerät 9 zu orten. Weil ein Ortungsvorgang mehrere Sekunden in Anspruch nimmt, wird der dritte Schritt S₃ mehrfach ausgeführt, so dass sich die Sendeleistung des mobilen Endgeräts 9 inkrementell erhöht.

Sobald die genaue Position des mobilen Endgeräts 9 erfasst wurde, wird das geortete mobile Endgerät 9 wieder in seinen normalen Betriebszustand überführt. Hierzu wird von der Anwendungsschicht 2 ein Signal/Interferenz-Verhältnis an die innere Schleife 21 oder eine Bitfehlerrate bzw. Blockfehlerrate an die äußere Schleife 20 übertragen, wobei die Bitfolge für den Sollwert 28 des Signal/Interferenz-Verhältnisses nicht dazu führt, dass die Regelschleife 31 durch die Steuereinheit 30 derart manipuliert wird, dass die erzeugte Stellgröße das mobile Endgerät 9 dazu veranlasst, die Sendeleistung stetig weiter bis zu der maximalen Sendeleistung zu erhöhen. Bevorzugt wird hierfür wieder eine maximal zulässige Bitfehlerrate, bzw. Blockfehlerrate an die äußere Schleife 20 übertragen, die identisch zu der maximal zulässigen Bitfehlerrate bzw. Blockfehlerrate der übrigen mit der Basisstation verbundenen mobilen Endgeräte ist. Alternativ kann auch ein Signal/Interferenz-Verhältnis vorgegeben werden, welches bevorzugt bei über 12,5 dB liegt.

Die Erfindung ist nicht auf die dargestellten Ausführungsbeispiele beschränkt. Alle beschriebenen und/oder gezeichneten Elemente sind im Rahmen der Erfindung beliebig miteinander kombinierbar. Die Erfindung ist nicht nur für UMTS-fähige mobile Endgeräte verwendbar. Vielmehr können alle mobilen Endgeräte, deren Funktechnik auf WCDMA basiert, unter Zuhilfenahme der hier vorliegenden Erfindung zur Erhöhung ihrer Sendeleistung bis hin zu der maximalen Sendeleistung gebracht werden. Die erfindungsgemäße Vorrichtung und das erfindungsgemäße Verfahren werden bevorzugt innerhalb eines Computersystems oder innerhalb eines FPGAs (engl. Field Programmable Gate Array; dt. Anordnung mit programmierbaren Logikgattern) eingesetzt.

## Patentansprüche

1. Verfahren zum gezielten Verändern der Sendeleistung zur Erfassung eines mobilen Endgeräts (9), durch eine Basisstation (1), die ein Signal/Interferenz-Verhältnis des mobilen Endgeräts (9) erfasst und das erfasste Signal/Interferenz Verhältnis einer Regeleinheit (31) zuführt,
wobei eine Steuereinheit (30) die Regeleinheit (31) derart beeinflusst, dass eine erzeugte Stellgröße das mobile Endgerät (9) dazu veranlasst, die Sendeleistung bis zu der maximalen Sendeleistung zu erhöhen, oder
wobei eine aus einer Speichereinheit (38) geladene manipulierte Stellgröße verwendet wird, die das mobile Endgerät (9) dazu veranlasst, die Sendeleistung bis zu der maximalen Sendeleistung zu erhöhen,
**dadurch gekennzeichnet,**
**dass** die Regeleinheit (31) in einer Schleife (21) arbeitet, wobei der Regeleinheit (31) ein Sollwert (28) des Signal/Interferenz Verhältnisses zugeführt wird und wobei die Regeleinheit (31) eine Stellgröße erzeugt, die an das mobile Endgerät (9) übertragen wird
und
**dass** bei Anliegen eines entsprechenden Befehls ein neuer Sollwert (28) des Signal/Interferenz Verhältnisses des mobilen Endgeräts (9) aus einer Speichereinheit (38) geladen wird, wobei dieser stets größer als ein gemessener Sollwert des Signal/Interferenz Verhältnisses des mobilen Endgeräts (9) ist
oder
**dass** bei Anliegen eines entsprechenden Befehls für den gemessenen Wert des Signal/Interferenz Verhältnisses des mobilen Endgeräts (9) ein Wert aus einer Speichereinheit (38) geladen wird, wobei dieser Wert stets kleiner als der Sollwert (28) des Signal/Interferenz Verhältnisses des mobilen Endgeräts (9) ist
und **dass** während das mobile Endgerät (9) mit erhöhter Leistung sendet, dessen Standort mittels eines Peilsystems (11) mit dazugehöriger Antenne (12) geortet wird.

2. Verfahren nach einem der vorherigen Ansprüche,
**dadurch gekennzeichnet,**
**dass** die Regeleinheit (31) innerhalb einer Bitübertragungsschicht (6) der Basisstation (1) arbeitet.

3. Verfahren nach einem der vorherigen Ansprüche,
**dadurch gekennzeichnet,**
**dass** der Befehl innerhalb einer Anwendungsschicht (2) erzeugt wird.

4. Verfahren nach einem der vorherigen Ansprüche,
**dadurch gekennzeichnet,**
**dass** der Befehl über eine Schnittstelle (5) über eine Iub-Schnittstelle, an die Bitübertragungsschicht (6) gesendet wird.

5. Verfahren nach Anspruch 4,
**dadurch gekennzeichnet,**
**dass** es sich bei dem Befehl um einen Befehl zur Einstellung eines bestimmten Signal/Interferenz Verhältnisses, SIR-target-Wert, handelt, wobei der Befehl zumindest einen Parameter aufweist, der im normalen Betriebsablauf nicht verwendet wird.

6. Verfahren nach Anspruch 4,
**dadurch gekennzeichnet,**
**dass** der Befehl über eine Ethernetschnittstelle an die Bitübertragungsschicht (6) gesendet wird.

7. Verfahren nach einem der vorherigen Ansprüche,
**dadurch gekennzeichnet,**
**dass** es sich bei der Stellgröße um TPC-Befehle handelt.

8. Verfahren nach einem der vorherigen Ansprüche,
**dadurch gekennzeichnet,**
**dass** nach erfolgter Ortung ein weiterer Befehl an die Regeleinheit (31) übertragen wird, wodurch die erzeugte Stellgröße das mobile Endgerät (9) dazu veranlasst, die Sendeleistung derart anzupassen, dass das gemessene Signal/Interferenz-Verhältnis des mobilen Endgeräts (9) gleich groß ist, wie das gemessene Signal/Interferenz-Verhältnis der übrigen mobilen Endgeräte.

9. Basisstation (1) zum gezielten Verändern der Sendeleistung zur Erfassung eines mobilen Endgeräts (9), die zumindest eine Messeinheit (26) aufweist, die ein Signal/Interferenz-Verhältnis des mobilen Endgeräts (9) misst und einer Regeleinheit (31) zuführt,
**dadurch gekennzeichnet,**
**dass** eine Steuereinheit (30) mit der Regeleinheit (31) verbunden ist und eine durch die Regeleinheit erzeugte Stellgröße das mobile Endgerät (9) dazu veranlasst, die Sendeleistung bis zu der maximalen Sendeleistung zu erhöhen, oder
**dass** eine manipulierte Stellgröße aus einer Speichereinheit (38) geladen wird und das mobile Endgerät (9) dazu veranlasst, die Sendeleistung bis zu der maximalen Sendeleistung zu erhöhen und
**dass** der Regeleinheit (31) an einem ersten Eingang (32) ein Sollwert (28) für das Signal/Interferenz-Verhältnis zugeführt ist und ein zweiter Eingang (33) mit der Messeinheit (26) verbunden ist und am Ausgang (34) der Regeleinheit (31) eine Stellgröße ausgegeben wird, die an das mobile Endgerät (9) übertragen wird,
und
**dass** der erste Eingang (32) mit der Speichereinheit (38) verbunden ist, die an die Regeleinheit (31) einen neuen Sollwert (28) für das Signal/Interferenz-Verhältnis überträgt, der stets größer ist, als ein gemessener Sollwert für das Signal/Interferenz-Verhältnis des mobilen Endgeräts (9)
oder
**dass** der zweite Eingang (33) mit der Speichereinheit (38) verbunden ist, die an die Regeleinheit (31) einen Wert überträgt, der stets kleiner als der Sollwert (28) für das Signal/Interferenz-Verhältnis ist
und **dass** ein Peilsystem (11) mit dazugehöriger Antenne (12) vorhanden ist und das mobile Endgerät (9) ortet.

10. Basisstation nach Anspruch 9,
**dadurch gekennzeichnet,**
**dass** die Regeleinheit (31) innerhalb einer Bitübertragungsschicht (6) realisiert arbeitet.

11. Basisstation nach Anspruch 10,
**dadurch gekennzeichnet,**
**dass** ein Befehl zur Erhöhung der standardkonformen Sendeleistung innerhalb einer Anwendungsschicht (2) erzeugt wird.

12. Basisstation nach Anspruch 11,
**dadurch gekennzeichnet,**
**dass** eine Schnittstelle (3, 5) die Anwendungsschicht (2) mit der Bitübertragungsschicht (6) verbindet.

13. Basisstation nach Anspruch 12,
**dadurch gekennzeichnet,**
**dass** die Schnittstelle (5) eine Iub-Schnittstelle ist.

14. Basisstation nach Anspruch 12,
**dadurch gekennzeichnet,**
**dass** es sich bei der Schnittstelle (3) um eine Ethernetschnittstelle handelt.

## Claims

1. Method for targeted alteration of the transmitting power for detection of a mobile terminal device (9) by a base station (1) which detects a signal-to-interference ratio of the mobile terminal device (9) and feeds the detected signal-to-interference ratio to a regulating unit (31),
wherein a control unit (30) influences the regulating unit (31) in such a way that a generated control variable causes the mobile terminal device (9) to increase the transmitting power up to the maximum transmitting power, or
wherein a manipulated control variable loaded from a storage unit (38) is used which causes the mobile terminal device (9) to increase the transmitting power up to the maximum transmitting power,
**characterised in that**
the regulating unit (31) works in a loop (21), the regulating unit (31) being fed a target value (28) for the signal-to-interference ratio and the regulating unit (31) generating a control variable which is transmitted to the mobile terminal device (9), and
**in that** when a corresponding command is present a new target value (28) for the signal-to-interference ratio of the mobile terminal device (9) is loaded from a storage unit (38), this value always being greater than a measured target value for the signal-to-interference ratio of the mobile terminal device (9), or
**in that** when a corresponding command is present for the measured value of the signal-to-interference ratio for the mobile terminal device (9) a value is loaded from a storage unit (38), this value always being smaller than the target value (28) for the signal-to-interference ratio of the mobile terminal device (9),
and **in that** while the mobile terminal device (9) is transmitting with increased power, its location is fixed by means of a position-fixing system (11) with an associated antenna (12).

2. Method according to one of the preceding claims,
**characterised in that**
the regulating unit (31) works within a physical layer (6) of the base station (1).

3. Method according to one of the preceding claims,
**characterised in that**
the command is generated within an application layer (2).

4. Method according to one of the preceding claims,
**characterised in that**
the command is transmitted to the physical layer (6) via an interface (5), an Iub interface.

5. Method according to claim 4,
**characterised in that**
the command is a command for setting a specific signal-to-interference ratio, SIR target value, the command exhibiting at least one parameter which is not used in normal operation.

6. Method according to claim 4,
**characterised in that**
the command is transmitted to the physical layer (6) via an Ethernet interface.

7. Method according to one of the preceding claims,
**characterised in that**
the control variable is TPC commands.

8. Method according to one of the preceding claims,
**characterised in that**
after the location has been fixed a further command is transmitted to the regulating unit (31) through which the generated control variable causes the mobile terminal device (9) to adjust the transmitting power in such a way that the measured signal-to-interference ratio of the mobile terminal device (9) is the same as the measured signal-to-interference ratio of the other mobile terminal devices.

9. Base station (1) for targeted alteration of the transmitting power for detection of a mobile terminal device (9), which exhibits at least one measuring unit (26) which measures a signal-to-interference ratio of the mobile terminal device (9) and feeds it to a regulating unit (31),
**characterised in that**
a control unit (30) is connected to the regulating unit (31) and a control variable generated by the regulating unit causes the mobile terminal device (9) to increase the transmitting power up to the maximum transmitting power, or
**in that** a manipulated control variable is loaded from a storage unit (38) and causes the mobile terminal device (9) to increase the transmitting power up to the maximum transmitting power, and
**in that** the regulating unit (31) is fed a target value (28) for the signal-to-interference ratio at a first input (32) and a second input (33) is connected to the measuring unit (26) and a control variable is produced at the output (34) of the regulating unit (31) which is transmitted to the mobile terminal device (9), and
**in that** the first input (32) is connected to the storage unit (38) which sends the regulating unit (31) a new target value (28) for the signal-to-interference ratio which is always greater than a measured target value for the signal-to-interference ratio of the mobile terminal device (9), or
**in that** the second input (33) is connected to the storage unit (38) which sends the regulating unit (31) a value which is always smaller than the target value (28) for the signal-to-interference ratio,
and **in that** a position-fixing system (11) with an associated antenna (12) is present and fixes the location of the mobile terminal device (9).

10. Base station according to claim 9,
**characterised in that**
the regulating unit (31) works produced within a physical layer (6).

11. Base station according to claim 10,
**characterised in that**
a command for increasing the standard transmitting power is generated within an application layer (2).

12. Base station according to claim 11,
**characterised in that**
an interface (3, 5) connects the application layer (2) to the physical layer (6).

13. Base station according to claim 12,
**characterised in that**
the interface (5) is an Iub interface.

14. Base station according to claim 12,
**characterised in that**
the interface (3) is an Ethernet interface.

## Revendications

1. Procédé en vue de la modification ciblée de la puissance d'émission en vue de la détection d'un terminal mobile (9), par l'intermédiaire d'une station de base (1), qui détecte un rapport signal/interférence du terminal mobile (9) et délivre le rapport signal/interférence détecté à une unité de réglage (31),
dans lequel une unité de commande (30) influence l'unité de réglage (31) de sorte qu'une grandeur de réglage générée amène le terminal mobile (9) à augmenter la puissance d'émission jusqu'à la puissance d'émission maximale, ou
dans lequel une grandeur de réglage manipulée chargée depuis une unité de stockage (38) est utilisée, qui amène le terminal mobile (9) à accroître la puissance d'émission jusqu'à la puissance d'émission maximale,
**caractérisé en ce que**
l'unité de réglage (31) fonctionne en boucle (21), dans laquelle une valeur de consigne (28) du rapport signal/interférence est délivrée à l'unité de réglage (31) et dans lequel l'unité de réglage (31) génère une grandeur de réglage, qui est transmise au terminal mobile (9) et
**en ce que**, dans le cas de la demande d'une commande correspondante, une nouvelle valeur de consigne (28) du rapport signal/interférence du terminal mobile (9) est chargée à partir d'une unité de stockage (38), dans laquelle celle-ci est toujours plus grande qu'une valeur de consigne mesurée du rapport signal/interférence du terminal mobile (9)
ou
**en ce que**, dans le cas de la demande d'une commande correspondante pour la valeur mesurée du rapport signal/interférence du terminal mobile (9), une valeur est chargée à partir d'une unité de stockage (38), dans laquelle cette valeur est toujours inférieure à la valeur de consigne (28) du rapport signal/interférence du terminal mobile (9)
et **en ce que**, pendant que le terminal mobile (9) émet avec une puissance accrue, son emplacement est localisé grâce à un système de ciblage (11) comportant une antenne associée (12).

2. Procédé selon l'une des revendications précédentes, **caractérisé en ce que**
l'unité de réglage (31) fonctionne à l'intérieur d'une couche de transmission de bits (6) de la station de base (1).

3. Procédé selon l'une des revendications précédentes, **caractérisé en ce que**
la commande est générée à l'intérieur d'une couche d'application (2).

4. Procédé selon l'une des revendications précédentes, **caractérisé en ce que**
la commande concernant une interface (5) est envoyée à la couche de transmission de bits (6) par l'intermédiaire d'une interface Iub.

5. Procédé selon la revendication 4, **caractérisé en ce que**
concernant la commande, il s'agit d'une commande pour régler un rapport signal/interférence déterminé, valeur cible du SIR, où la commande présente au moins un paramètre, qui n'est pas utilisé en fonctionnement normal.

6. Procédé selon la revendication 4, **caractérisé en ce que**
la commande est envoyée par l'intermédiaire d'une interface Ethernet à la couche de transmission de bits (6).

7. Procédé selon l'une des revendications précédentes, **caractérisé en ce que**
concernant la grandeur de réglage, il s'agit de commandes TPC.

8. Procédé selon l'une des revendications précédentes, **caractérisé en ce que**
après la localisation effectuée, une autre commande est transmise à l'unité de réglage (31), grâce à laquelle la grandeur de réglage générée amène le terminal mobile (9) à adapter la puissance d'émission, de sorte que le rapport signal/interférence mesuré du terminal mobile (9) est aussi grand que le rapport signal/ interférence mesuré des autres terminaux mobiles.

9. Station de base (1) en vue de la modification ciblée de la puissance d'émission pour détecter un terminal mobile (9), qui comporte au moins une unité de mesure (26), qui mesure un rapport signal/interférence du terminal mobile (9) et le délivre à une unité de réglage (31),
**caractérisée en ce que**
une unité de commande (30) est reliée à l'unité de réglage (31) et une grandeur de réglage générée par l'unité de réglage amène le terminal mobile (9) à accroître la puissance d'émission jusqu'à la puissance d'émission maximale, ou
**en ce qu'**une grandeur de réglage manipulée est chargée à partir d'une unité de stockage (38) et amène le terminal mobile (9) à accroître la puissance d'émission jusqu'à la puissance d'émission maximale et
**en ce qu'**une valeur de consigne (28) pour le rapport signal/interférence est délivrée à l'unité de réglage (31) à une première entrée (32) et une seconde entrée (33) est reliée à l'unité de mesure (26) et une grandeur de réglage est délivrée à la sortie (34) de l'unité de réglage (31), qui est transmise au terminal mobile (9), et
**en ce que** la première entrée (32) est reliée à l'unité de stockage (38), qui transmet à l'unité de réglage (31) une nouvelle valeur de consigne (28) pour le rapport signal/interférence, qui est toujours plus grande qu'une valeur de consigne mesurée pour le rapport signal/interférence du terminal mobile (9)
ou
**en ce que** la seconde entrée (33) est reliée à l'unité de stockage (38), qui transmet à l'unité de réglage (31) une valeur qui est toujours inférieure à la valeur de consigne (28) pour le rapport signal/interférence
et **en ce qu'**un système de ciblage (11) comportant une antenne associée (12) existe et localise le terminal mobile (9).

10. Station de base selon la revendication 9, **caractérisée en ce que**
l'unité de réglage (31) fonctionne à l'intérieur d'une couche de transmission de bits (6).

11. Station de base selon la revendication 10, **caractérisée en ce que**
une commande pour accroître la puissance d'émission conforme au standard est générée à l'intérieur d'une couche d'application (2).

12. Station de base selon la revendication 11, **caractérisée en ce que**
une interface (3, 5) relie la couche d'application (2) à la couche de transmission de bits (6).

13. Station de base selon la revendication 12, **caractérisée en ce que**
l'interface (5) est une interface Iub.

14. Station de base selon la revendication 12, **caractérisée en ce que**
concernant l'interface (3), il s'agit d'une interface Ethernet.
